# EUROPÄISCHE PATENTSCHRIFT

(11) **EP 0 832 384 B1**
(45) Veröffentlichungstag und Bekanntmachung des Hinweises auf die Patenterteilung: **24.04.2002**
(21) Anmeldenummer: 96914044.1
(22) Anmeldetag: 04.06.1996
(51) Int. Cl.: F16J 15/26

(54) **DICHTUNGSRING**
SEALING RING
BAGUE D'ETANCHEITE

(30) Priorität: 14.06.1995 EP 95810402
(43) Veröffentlichungstag der Anmeldung: 01.04.1998
(73) Patentinhaber: Maschinenfabrik Sulzer-Burckhardt AG, 8404 Winterthur (CH)
(72) Erfinder: FEISTEL, Norbert, CH-8408 Winterthur (CH)
(74) Vertreter: Graf, Werner
(86) Internationale Anmeldenummer: CH9600216
(87) Internationale Veröffentlichungsnummer: WO9700397

(56) Entgegenhaltungen:
- CH-A- 439 897
- DE-C- 4 201 246
- DE-U- 7 318 583
- FR-A- 490 322
- GB-A- 429 814
- US-A- 2 846 281

## Beschreibung

Die Erfindung betrifft einen Dichtungsring gemäss dem Oberbegriff von Anspruch 1.

Aus dem Patent CH 439 897 ist ein mehrteiliger Dichtungsring bestehend aus drei Ringsegmenten bekannt. Die Stossstellen der Ringsegmente bilden einen in axialer Richtung verlaufenden, durchgängigen Spalt. Solche Dichtungsringe sind üblicherweise paarweise in einer Reihenschaltung hintereinander angeordnet und bilden derart eine sogenannte Packung, um die Gleitfläche eines abzudichtenden Körpers, beispielsweise einer Kolbenstange eines Kolbenkompressors abzudichten. Dieser bekannte Dichtungsring weist den Nachteil auf, dass zum Abdichten der durchgängigen Spalte jeweils in axialer Richtung paarweise zwei Dichtungsringe nebeneinander anzuordnen sind. Ein weiterer Nachteil ist darin zu sehen, dass ein paarweise angeordnetes Dichtungsringpaar eine relativ grosse Ausdehnung in axialer Richtung aufweist, was eine erhöhte Reibungswärme bewirkt. Diese Reibungswärme ist zudem schlecht abführbar, weil der Dichtungsring üblicherweise aus Kunststoff gefertigt ist und eine niedrige Wärmeleitfähigkeit aufweist, was den Wärmetransport vom abzudichtenden Körper zu einer aussenliegenden Kühlvorrichtung behindert.

Die Druckschrift US 2,846,281 offenbart einen Kolbenring gemäß dem Oberbegriff des Anspruchs 1. Nachteilig an diesem Kolbenring sind die Tatsachen, dass dieser nicht zum Dichten einer Stange geeignet ist, dass der Ring in axialer Richtung eine geringe Dichtwirkung aufweist, insbesondere bei einer Verformung des Kolbenrings, und dass der Kolbenring, insbesondere bei der Verwendung von sprödem Material, sehr bruchgefährdet ist.

Es ist Aufgabe der vorliegenden Erfindung einen Dichtungsring vorzuschlagen, der diese Nachteile überwindet.

Diese Aufgabe wird gelöst mit einem Dichtungsring gemäss den Merkmalen von Anspruch 1. Die Unteransprüche 2 - 11 beziehen sich auf weitere vorteilhafte Ausführungsformen des erfindungsgemässen Dichtungsrings.

Der erfindungsgemässe Dichtungsring besteht aus einem mehrteiligen Ring, der durch mindestens zwei Ringsegmente gebildet ist, wobei die Ringsegmente gegenseitige Stossstellen aufweisen, die in Umfangsrichtung des Dichtungsrings überlappend ausgestaltet sind.

Ein Vorteil des erfindungsgemässen Dichtungsrings ist darin zu sehen, dass benachbärte Ringsegmente jeweils einen gegenseitig überlappenden Stoss aufweisen, so dass in einer vertikal zum Dichtungsring verlaufenden Richtung, beziehungsweise in einer zum abzudichtenden Körper axialen Richtung, zwischen den Ringsegmenten kein geradlinig durchgängiger Spalt vorhanden ist. Ein solcher Dichtungsring weist in der zum abzudichtenden Körper axialen Richtung eine ausgezeichnete Dichtheit auf. In einer weiteren vorteilhaften Ausgestaltung des erfindungsgemässen Dichtungsrings wird aussen umlaufend um die Ringsegmente ein Deckring angeordnet, welcher die zwischen den Ringsegmenten in radialer Richtung verlaufenden Stossstellen aussen überdeckt und dadurch abdichtet. Der Deckring dient zudem zum gegenseitigen Stabilisieren der Ringsegmente. Vorteilhafterweise wird aussen auf dem Deckring aufliegend eine in Umfangsrichtung verlaufende Feder, wie z.B. eine Schlauchfeder, angeordnet, um auf die Ringsegmente eine radial nach innen wirkende Kraft auszuüben. Der Deckring kann zudem ein mit einem der Ringsegmente zusammenwirkendes Verbindungselement aufweisen, um ein Verdrehen des Deckrings gegenüber den einzelnen Ringsegmenten zu verhindern.

Ein Dichtungsring kann bezüglich einer abzudichtenden Stange derart ausgestaltet sein, dass die einzelnen Ringsegmenten ein in Umfangsrichtung des Dichtungsringes verlauf endes, gegenseitiges Spiel aufweist. Der Dichtungsring erfährt während dem Einsatz auf der der Stange zugewandten Fläche einen fortschreitenden Verschleiss. Der erfindungsgemässe Dichtungsring weist den Vorteil auf, dass auf Grund des Spiels zwischen den einzelnen Ringsegmenten sowie der den Dichtungsring umspannenden Schlauchfeder die Ringsegmente ständig einer in radialer Richtung zur Stange hin wirkenden Kraft unterliegen, sodass während dem fortschreitenden Verschleiss das Spiel zwischen den Ringsegmenten ständig verringert wird, wobei die Ringsegmente auf der Stange aufliegen und ihre Dichtfunktion bewahren. Zudem bleibt durch die überlappenden Stossstellen die Dichtfunktion des Dichtungsringes in axialer Richtung erhalten.

Die sich überlappenden Abschnitte der Ringsegmente sind derart ausgestaltet, dass selbst wenn das Spiel von einem oder mehreren benachbarten Ringsegmenten zu Null wird, die restlichen benachbarten Ringsegmente immer noch Abschnitte mit überlappenden Stossstellen aufweisen. Dadurch ist sichergestellt, dass in keiner Stellung der Ringsegmente an den Stossstellen eine Leckage in axialer Richtung auftritt.

Ein Dichtungsring umfassend mindestens zwei Ringsegmente sowie einen aussen umlaufenden Deckring weist den Vorteil auf, dass sich durch die Kombination von überlappendem Stoss und aussen umlaufendem Deckring eine sehr gute Dichtwirkung in axialer Richtung ergibt, sowie dass zur Dichtung in axialer Richtung nur ein einziger Dichtungsring erforderlich ist, so dass der Dichtungsring in axialer Richtung eine geringe Bauhöhe aufweist. Ein weiterer Vorteil des erfindungsgemässen Dichtungsrings ist darin zu sehen, dass als Material für die Ringsegmente auch ein relativ steifes Mäterial verwendet werden kann, so dass als Material für die Ringsegmente auch einen Hochtemperatur-Polymer wie z. B. modifiziertes PEEK verwendbar ist.

In einer weiteren vorteilhaften Ausgestaltung ist der erfindungsgemässe Dichtungsring derart ausgestaltet, dass die gegenseitigen Ringsegmente kein gegenseitiges Spiel aufweisen, wobei der Durchmesser der abzudichtenden Stange derart gewählt ist, dass sich zwischen dem Dichtungsring und der Stange eine Spaltringdichtung ergibt. Bei einem derart ausgestalteten Dichtungsring können die Ringsegmente auch aus einem keramischen Werkstoff bestehen, wobei der die Ringsegmente in Umfangsrichtung umschliessende Deckring weiterhin aus einem Kunststoff besteht.

Ein weiterer Vorteil des Dichtungsringes ist darin zu sehen, dass durch seine Bauform eine Montage des Rings bei eingebauter Kolbenstange problemlos möglich ist.

Die folgenden Figuren beschreiben ein Ausführungsbeispiel der Erfindung. Es zeigen:

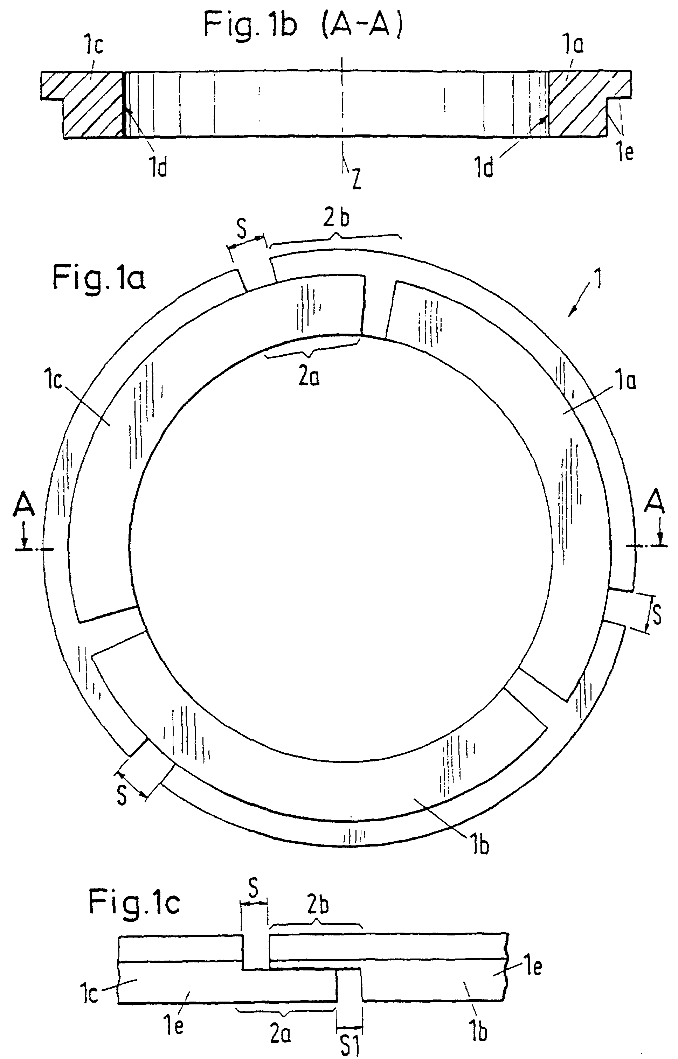

- Fig. 1a: eine Aufsicht eines mehrteiligen Dichtungsrings;
- Fig. 1b: ein Schnitt entlang der Linie A-A gemäss Fig. 1a;
- Fig. 1c: eine Seitenansicht einer Stossstelle zwischen zwei Ringsegmenten;

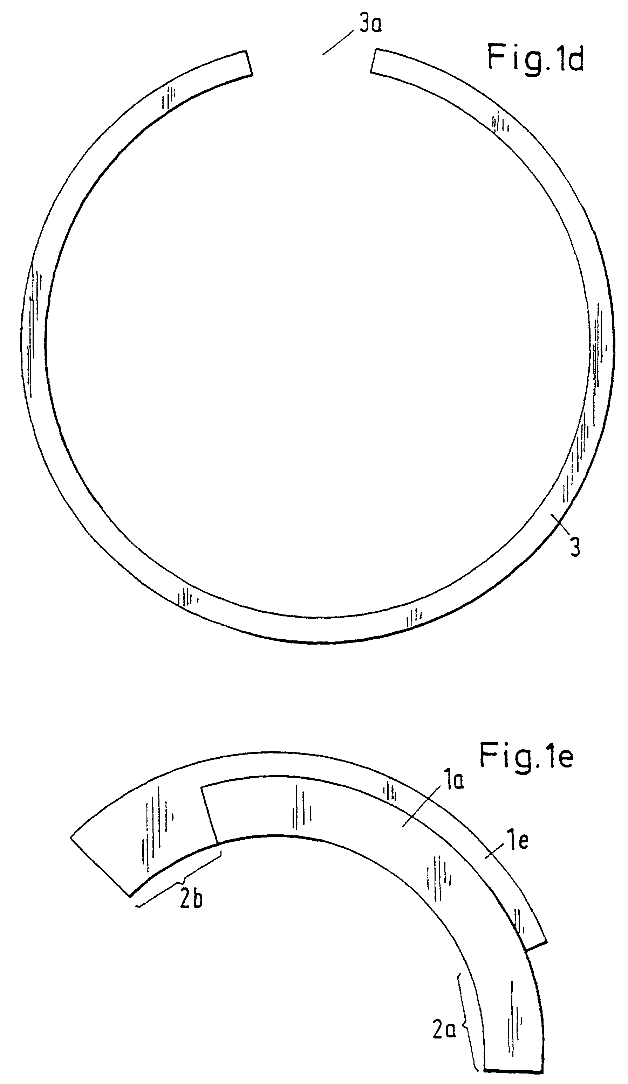

- Fig. 1d: einen umlaufenden Deckring in Aufsicht;
- Fig. 1e: eine Aufsicht auf ein Ringsegment des Dichtungsrings und

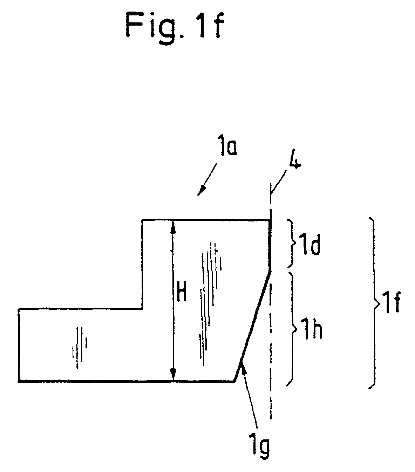

- Fig. 1f: ein weiteres Ausführungsbeispiel eines Schnittes entlang der Linie A-A durch ein Ringsegment.

Fig. 1a zeigt einen Dichtungsring 1 ausgestaltet als mehrteiliger Ring mit drei Ringsegmenten 1a, 1b, 1c. Die einzelnen Ringsegmente 1a, 1b, 1c weisen gegenseitige Stossstellen auf, mit einem gegenseitigen, in Umfangsrichtung des Dichtungsrings 1 verlaufenden Spiel S. Die Segmente 1a, 1b, 1c weisen in Umfangsrichtung des Dichtungsrings 1 verlaufende Abschnitte 2a, 2b auf, welche eine überlappende Stossstelle ausbilden. Fig. 1b zeigt einen Schnitt durch die Fig. 1a entlang der Linie A-A. Die Ringsegmente 1a, 1c weisen eine gegen das Zentrum Z des Dichtungsrings 1 hin orientierte Dichtungsfläche 1d auf, welche auf dem abzudichtenden Fläche mit kreisförmigem Querschnitt, z. B. einer Kolbenstange, aufliegt oder unter geringem Abstand beabstandet ist. Im vorliegenden Ausführungsbeispiel sind die Ringsegmente 1a, 1c im dargestellten Querschnitt L-förmig ausgestaltet und weisen eine rechteckige Ausnehmung 1e auf. Diese Ausnehmung 1e dient zur Aufnahme eines in Fig. 1d dargestellten Deckrings 3, welcher von seiner Dimension derart ausgestaltet ist, dass er einen Querschnitt entsprechend der Ausnehmung 1e aufweist, sodass der Deckring 3 in diese Ausnehmung 1e einfügbar ist. Der Deckring kann elastische, federnde Eigenschaften aufweisen, und wird derart über den Dichtungsring 1 gelegt, dass er die einzelnen Ringsegmente 1a, 1b, 1c in der Ausnehmung 1e liegend in Umfangsrichtung umfasst. Der Deckring weist, wie in Fig. 1d dargestellt, einen Ausschnitt 3a auf. Weiter kann der Deckring 3 von einer in Umfangsrichtung verlaufenden Schlauchfeder umgeben sein. Diese Feder bewirkt auf die Ringsegmente eine gegen das Zentrum Z hin wirkende Kraft. Die Ringsegmente 1a, 1b, 1c weisen in der Ausführungsform gemäss Fig. 1a in radialer Richtung verlaufende Stossstellen auf. Der Deckring 3 dichtet den zwischen den Segmenten in radialer Richtung verlaufende Spalt oder Stoss ab. Die Federkraft bewirkt, dass die Ringsegmente auf der Kolbenstange aufliegen, sodass sich bei Abnutzung der Dichtungsfläche 1d das Spiel S zwischen den einzelnen Ringsegmenten 1a, 1b, 1c verringert. Ein derartiger mit einem Stoss-Spiel > 0 behafteter Dichtungsring wird auch als ein Reibring bezeichnet.
Solange der Dichtungsring 1 zwischen den Segmenten 1a, 1b, 1c ein Spiel S aufweist ist es möglich, dass das Spiel zwischen den einzelnen Segmenten 1a, 1b, 1c unterschiedlich breit sein kann. Im Extremfall weisen zwei Stossstellen ein Stoss-Spiel = 0 auf, sodass das Spiel S an der dritten Stossstelle sehr gross wird. Die in Umfangsrichtung des Dichtungsrings 1 verlaufenden Abschnitte 2a, 2b sind vorteilhafterweise derart ausgestaltet, dass sie sich selbst in dem genannten Extremfall gegenseitig überlappen und eine Dichtwirkung in axialer Richtung aufweisen.

In Fig. 1c ist eine Seitenansicht einer Stossstelle zwischen zwei Ringsegmente 1b, 1c mit in Umfangsrichtung des Dichtungsrings 1 verlaufenden Abschnitten 2a, 2b dargestellt. Die Spaltbreiten S, S1 können die gleiche oder auch eine unterschiedliche Breite aufweisen. Die Ringsegmente 1b, 1c, weisen eine Ausnehmung 1e für einen Dichtungsring 3 auf. Fig. 1e zeigt ein einzelnes Ringsegment 1a mit Ausnehmung 1e sowie den beiden Abschnitten 2a, 2b. Erfindungswesentlich ist der Aspekt, dass sich die Stossstellen 2a, 2b von nebeneinander liegenden Ringsegmenten in Umfangsrichtung des Dichtungsrings 1 überlappen. Ansonst können die Stossstellen 2a, 2b in einer Vielzahl von Möglichkeiten ausgestaltet sein um eine Dichtfunktion in axialer Richtung zu bewirken sowie ein Spiel S in Umfangsrichtung des Dichtungsrings 1 aufzuweisen. Ebenfalls kann die Ausnehmung 1e auf unterschiedlichste Weise ausgestaltet sein, um einen Deckring 3 aufzunehmen, oder um unmittelbar und ohne Deckring 3 eine Schlauchfeder aufzunehmen. Der Dichtungsring 1 kann auch ohne Ausnehmung 1e ausgestaltet sein, bestehend wie in Fig. 1 dargestellt einzig aus drei oder mehreren Ringsegmenten 1a, 1b, 1c.

Fig. 1f zeigt einen Schnitt durch ein Ringsegment z. B. entlang der Linie A-A gemäss Fig. 1a mit einer weiteren Gestaltungsmöglichkeit des Querschnittes. Das Ringsegment 1a weist eine zu einer Gleitfläche 4, ausgeführt als Kolbenstange, hin orientierte Fläche 1f auf. Diese Fläche 1f weist in axialer Richtung eine Höhe H auf und ist über einen Teil 1d zylindrisch verlaufend ausgestaltet, um eine Dichtfläche 1d zu bilden und über einen weiteren Teil 1h sich erweiternd ausgestaltet. Die sich erweiternde Fläche 1g kann z. B. konisch ausgestaltet sein. Der erfindungsgemässe Dichtungsring 1 weist eine ausgezeichnete Dichtwirkung auf, da sowohl in axialer wie auch in radialer Richtung eine Durchströmung verhindert wird. Somit entweichen Gasanteile vorwiegend zwischen der Dichtfläche 1d und der Gleitfläche 4, was den Vorteil aufweist, dass der Dichtungsring 1 leicht von der Gleitfläche 4 abgehoben wird, und somit die Reibung reduziert wird. Die sich erweiternde Fläche 1g bewirkt, dass die Gasanteile ungehindert in Richtung der reduzierten Dichtfläche 1d gemäss Fig. 1f strömen, wobei die Gasanteilte sowohl auf die Fläche 1g als auch auf die Fläche 1d eine in radialer Richtung nach aussen wirkende Kraft auf den Dichtungsring 1 ausüben. Somit wird die Leckage zwischen der Dichtfläche 1d und der Gleitfläche 4 einer Kolbenstange begünstigt, wodurch die Gaslagerung des Dichtelementes verbessert wird.

Die Ringsegmente 1a, 1b, 1c lassen sich aus unterschiedlichen Materialien herstellen, insbesondere aus Kunststoffen wie Polytetrafluorethylen (PTFE), einem modifizierten Hochtemperatur-Polymer wie Polyetheretherketon (PEEK), Polyetherketon (PEK), Polyimid (PI), Polyphenylensulfid (PPS), Polybenzimidazol (PBI), Polyamidimid (PAI) oder einem modifizierten Epoxidharz. Die Hochtemperatur-Polymere sind Kunststoffe, die in reiner Form nicht trockenlauffähig sind, sodass zusätzliche Festschmierstoffe wie z.B. Kohle, Graphit, Molybdändisulfid oder PTFE notwendig sind.

In einer weiteren Ausführungsform wird, ausgehend von einem vorgegebenen Durchmesser einer Kolbenstange, der Dichtungsring derart ausgestaltet, dass die einzelnen Segmente ohne ein Spiel S, d.h. mit einem Stoss-Spiel = 0 die Kolbenstange umschliessen. Eine solche Abdichtung wird als eine Spaltringdichtung bezeichnet. In einer derartigen Ausführungsform können die Ringsegmente auch aus einem keramischen Material gefertigt sein, wobei der die Segmente umschliessende Deckring weiterhin aus Kunststoff besteht. Eine optimale Dichtwirkung eines Dichtungsrings 1 wird erreicht bei einem gerade geschlossenen Stoss, das heisst bei einem Stoss-Spiel = 0. In dieser Situation besteht kein Anpressdruck der Segmente auf die Kolbenstange, sodass keine Reibleistung entsteht. Zudem ist die Leckage minimal, da keine Spalte geöffnet sind. Mit Ringsegmenten aus keramischem Material lässt sich dieser Zustand über lange Zeit erhalten, da eine allfällige Berührung mit der Kolbenstange nicht zu einem Verschleiss führt. Die Segmente sind zudem formstabil, sodass die Segmente unter dem anliegenden Differenzdruck nicht verformt werden. Dabei ist zu berücksichtigen, dass keine nennenswert hohen Flächenpressungen oder längere Kontakte zwischen dem Segment und der Kolbenstange erfolgen. Bei einem Stoss-Spiel = 0 sind die radialen und axialen Stösse zwischen den Segmenten sehr dicht, sodass die Leckage zwischen der Dichtfläche 1d und der Gleitfläche 4 der Kolbenstange erfolgt, und sich somit eine Gaslagerung ausbildet. In einer vorteilhaften Ausführungsform weist das keramische Segment einen Querschnitt wie in Fig. 1f dargestellt auf. Die reduzierte Dichtfläche 1d sowie die sich erweiternde Fläche 1g unterstützen die eine Gaslagerung bewirkende Leckage.

## Patentansprüche

1. Dichtungsring (1) umfassend mindestens zwei Segmente (1a, 1b, 1c), wobei die Segmente (1a, 1b, 1c) in Umfangsrichtung des Dichtungsrings (1) verlaufende Abschnitte (2a, 2b) aufweisen, welche eine überlappende Stossstelle ausbilden, **dadurch gekennzeichnet, dass** die Segmente (1a, 1b, 1c) mit Ausnahme der Abschnitte (2a, 2b) einen L-förmigen Querschnitt aufweisen.

2. Dichtungsring (1) nach Anspruch 1, **dadurch gekennzeichnet, dass** ein Deckring (3) die Segmente (1a, 1b, 1c) in Umfangsrichtung des Dichtungsringes (1) umschliesst.

3. Dichtungsring (1) nach einem der Ansprüche 1 oder 2, **dadurch gekennzeichnet, dass** die Abschnitte (2a, 2b) derart ausgestaltet sind, dass zwei benachbarte Segmente (1a, 1b, 1c) in Umfangsrichtung des Dichtungsringes (1) ein gegenseitiges Spiel (S) aufweisen.

4. Dichtungsring (1) nach Anspruch 3, **dadurch gekennzeichnet, dass** die Abschnitte (2a, 2b) derart ausgestaltet sind, dass wenn ein oder mehrere benachbarte Segmente (1a, 1b, 1c) ein gegenseitiges Spiel von S=0 aufweisen, die Abschnitte (2a, 2b) der restlichen benachbarten Segmente immer noch überlappende Stossstelle ausbilden.

5. Dichtungsring (1) nach Anspruch 4, **dadurch gekennzeichnet, dass** die Abschnitte (2a, 2b) derart ausgestaltet sind, dass benachbarte Segmente (1a, 1b, 1c) in Umfangsrichtung des Dichtungsringes (1) spiellos nebeneinander angeordnet sind.

6. Dichtungsring (1) nach einem der Ansprüche 1 bis 4, **dadurch gekennzeichnet, dass** die Segmente (1a, 1b, 1c) aus Kunststoff wie Polytetrafluorethylen (PTFE), einem modifizierten Hochtemperatur-Polymer wie Polyetheretherketon (PEEK), Polyetherketon (PEK), Polyimid (PI), Polyphenylensulfid (PPS), Polybenzimidazol (PBI), Polyamidimid (PAI) oder einem modifizierten Epoxidharz gefertigt sind.

7. Dichtungsring (1) nach Anspruch 5, **dadurch gekennzeichnet, dass** die Segmente (1a, 1b, 1c) aus einem keramischen Werkstoff gefertigt sind.

8. Dichtungsring (1) nach einem der Ansprüche 1 bis 7, **dadurch gekennzeichnet dass** der Dichtungsring (1) elastisch federnde Eigenschaften aufweist oder von einer auf dem Dichtungsring (1) aufliegenden, in Umfangsrichtung des Dichtungsringes (1) verlaufenden Feder umgeben ist.

9. Dichtungsring (1) nach einem der Ansprüche 1 bis 8, **dadurch gekennzeichnet, dass** die Segmente (1a, 1b, 1c) ein zu einer abzudichtenden Gleitfläche (4) hin orientierte Fläche (1f) aufweisen, dass die Fläche (1f) in einer senkrecht zur Umfangsrichtung des Dichtungsrings (1) verlaufenden Richtung eine Höhe (H) aufweist, dass die Fläche (1f) über einen Teil der Höhe (H) zylinderförmig ausgestaltet ist, um eine Dichtfläche (1d) zu bilden, und über einen weiteren Teil (1h) eine Fläche (1g) mit einem bezüglich der Dichtfläche (1d) vergrösserten Radius aufweist.

10. Dichtungsring (1) nach Anspruch 9, **dadurch gekennzeichnet, dass** die Fläche (1g) über dem weiteren Teil (1h) sich konisch erweiternd ausgestaltet ist.

11. Dichtungsring (1) nach einem der vorhergehenden Ansprüche, **dadurch gekennzeichnet, dass** dieser eine radial nach innen ausgerichtet verlaufende Dichtfläche (1d) aufweist.

12. Packung zur Dichtung der Gleitfläche (4) eines Körpers mit einem Dichtungsring nach einem der Ansprüche 1 bis 11.

13. Kolbenkompressor mit einem Dichtungsring nach einem der Ansprüche 1 bis 11.

## Claims

1. A sealing ring (1) comprising at least two segments (1a, 1b, 1c), with the segments (1a, 1b, 1c) having portions (2a, 2b) running in the circumferential direction of the sealing ring (1), which form an overlapping joint, .
**characterised in that** the segments (1a, 1b, 1c) have an L-shaped cross-section with the exception of the portions (2a, 2b).

2. A sealing ring (1) in accordance with claim 1,
**characterised in that** a cover ring (3) surrounds the segments (1a, 1b, 1c) in the circumferential direction of the sealing ring (1).

3. A sealing ring (1) in accordance with one of the claims 1 or 2,
**characterised in that** the portions (2a, 2b) are formed in such a way that two adjacent segments (1a, 1b, 1c) have a mutual clearance (S) in the circumferential direction of the sealing ring (1).

4. A sealing ring (1) in accordance with claim 3,
**characterised in that** the portions (2a, 2b) are designed in such a way that if one or more adjacent segments (1a, 1b, 1c) have a mutual clearance of S=0, the portions (2a, 2b) of the remaining adjacent segments still form overlapping joints.

5. A sealing ring (1) in accordance with claim 4,
**characterised in that** the portions (2a, 2b) are developed in such a way that adjacent segments (1a, 1b, 1c) are arranged in the circumferential direction of the sealing ring (1) next to one another without clearance.

6. A sealing ring (1) in accordance with one of the claims 1 to 4,
**characterised in that** the segments (1a, 1b, 1c) are manufactured of plastic such as poly(tetrafluoroetheylene) (PTFE), a modified high temperature polymer such as poly(ether ether ketone) (PEEK), poly(ether ketone) (PEK), polyimide (PI), poly(phenylene sulfide) (PPS), polybenzimidazole (PBI), polyamideimide (PAI) or a modified epoxy resin.

7. A sealing ring in accordance with claim 5, **characterised in that** the segments (1a, 1b, 1c) are manufactured of a ceramic material.

8. A sealing ring (1) in accordance with one of the claims 1 to 7,
**characterised in that** the sealing ring (1) has spring elastic characteristics or is surrounded by a spring lying on the sealing ring (1) and extending in the circumferential direction of the sealing ring (1).

9. A sealing ring (1) in accordance with one of the claims 1 to 8,
**characterised in that** the segments (1a, 1b, 1c) have a surface (1f) orientated towards a sliding surface (4) which is to be sealed, **in that** the surface (1f) has a height (H) extending in a direction perpendicular to the circumferential direction of the sealing ring (1), **in that** the surface (1f) is formed in a cylinder shape across one part of the height (H), in order to form a sealing surface (1d), and that across a further part (1h) it has a surface (1g) with an enlarged radius in relation to the sealing surface (1d).

10. A sealing ring (1) in accordance with claim 9,
**characterised in that** the surface (1g) is formed to widen conically over a further part (1h).

11. A sealing ring (1) in accordance with one of the preceding claims,
**characterised in that** it has a radially inwardly directed sealing surface (1d).

12. A packing to seal the sliding surface (4) of a body with a sealing ring in accordance with one of the claims 1 to 11.

13. A piston compressor with a sealing ring in accordance with one of the claims 1 to 11.

## Revendications

1. Bague d'étanchéité (1) comprenant au moins deux segments (1a, 1b, 1c), les segments (1a, 1b, 1c) présentant des tronçons (2a, 2b) s'étendant dans la direction périphérique de la bague d'étanchéité (1), tronçons constituant un point de jointoiement avec chevauchement, **caractérisée en ce que** les segments (1a, 1b, 1c), à l'exception des tronçons (2a, 2b) présentent une section transversale en forme de L.

2. Bague d'étanchéité (1) selon la revendication 1, **caractérisée en ce qu'**une bague de couverture (3) entoure les segments (1a, 1b, 1c), dans la direction périphérique de la bague d'étanchéité (1).

3. Bague d'étanchéité (1) selon l'une des revendications 1 ou 2, **caractérisée en ce que** les tronçons (2a, 2b) sont configurés de manière que deux segments (1a, 1b, 1c) voisins présentent dans la direction périphérique de la bague d'étanchéité (1) un jeu (S).

4. Bague d'étanchéité (1) selon la revendication 3, **caractérisée en ce que** les tronçons (2a, 2b) sont configurés de manière que lorsqu'un ou plusieurs segments (1a, 1b, 1c) voisins présentent un jeu mutuel S=0, les tronçons (2a, 2b) des segments voisins restants constituent encore un point de jointoiement avec chevauchement.

5. Bague d'étanchéité (1) selon la revendication 4, **caractérisée en ce que** les tronçons (2a, 2b) sont configurés de manière que des segments (1a, 1b, 1c) voisins sont disposés les uns à côté des autres, sans jeu, dans la direction périphérique de la bague d'étanchéité (1).

6. Bague d'étanchéité (1) selon l'une des revendications 1 à 4, **caractérisée en ce que** les segments (1a, 1b, 1c) sont fabriqués en matière synthétique, tel que du polytetraflurethylène (PTFE), un polymère haute température modifié tel que du polyetherethercetone (PEEK), du polyethercétone (PEK), un polyimide (PI), un sulfure de polyphenylène (PPS), un polybenzimidazol (PBI), un polyamidimide (PAI) ou une résine époxy modifiée.

7. Bague d'étanchéité (1) selon la revendication 5, **caractérisée en ce que** les segments (1a, 1b, 1c) sont fabriqués à partir d'un matériau céramique.

8. Bague d'étanchéité (1) selon l'une des revendications 1 à 7, **caractérisée en ce que** la bague d'étanchéité (1) présente des propriétés de déformation élastique ou bien est entourée par un ressort reposant sur la bague d'étanchéité (1), s'étendant dans la direction périphérique de la bague d'étanchéité (1).

9. Bague d'étanchéité (1) selon l'une des revendications 1 à 8, **caractérisée en ce que** les segments (1a, 1b, 1c) présentent une face (1f) orientée en direction d'une surface de glissement (4) sur laquelle on veut exercer une étanchéité, **en ce que** la face (1f) présente dans une direction s'étendant perpendiculairement par rapport à la direction périphérique de la bague d'étanchéité (l) une hauteur (h) , **en ce que** la face (1f) est de configuration cylindrique sur une partie de la hauteur (h) pour former une surface d'étanchéité (1) et présente sur une autre partie (1h) une phase (1g) ayant un rayon agrandi par rapport à la surface d'étanchéité (1d).

10. Bague d'étanchéité (1) selon la revendication 9, **caractérisée en ce que** la face (1g) est de configuration allant en s'élargissant de façon conique, sur l'autre partie (1h)

11. Bague d'étanchéité (1) selon l'une des revendications précédentes, **caractérisée en ce que** celle-ci présente une phase d'étanchéité (1d) s'étendant radialement, orientée vers l'intérieur.

12. Garniture pour l'étanchéité de la surface de glissement (4) d'un corps avec une bague d'étanchéité selon l'une des revendications 1 à 11.

13. Compresseur à piston équipé d'une bague d'étanchéité selon l'une des revendications 1 à 11.
